# DEMANDE DE BREVET EUROPEEN

(11) **EP 1 416 174 A1**
(43) Date de publication de la demande: **06.05.2004**
(21) Numéro de dépôt: 02292700.8
(22) Date de dépôt: 30.10.2002
(51) Int. Cl.: F16B 41/00

(54) **Organe de fixation à intégrité controlable**

(71) Demandeur: EUROPEAN COMMUNITY, 1049 Brussels (BE)
(72) Inventeur: Azzalin, Graziano, 28043 Oleggio (IT); Korn, Christophe, 21030 Ferrera Di Varese (IT); Poucet, André, 21033 Cittiglio (IT); Sironi, Marco, 21014 Laverno Mombello (IT)
(74) Mandataire: Schmitt, Armand

(57) **Abrégé**

L'invention concerne un organe de fixation comprenant une partie filetée (150) et une tête (100) permettant de faire tourner la partie filetée pour assurer le serrage de l'organe de fixation dans un élément correspondant, La tête (100) est formée d'un plateau (110) solidaire de la partie filetée (150) et d'un capot (120) couvrant ledit plateau. Le capot (120) comporte une portion évidée (121) dans laquelle un décrochement est ménagé pour former un logement (128). Le plateau (110) comprend un doigt de guidage (111) disposé à l'intérieur du logement (128) pour former une butée sur laquelle le capot prend appui pour entraîner en rotation le plateau dans le sens de serrage. Le capot (120) comprend en outre un composant électronique interrogeable à distance (130) qui comprend un moyen de mémorisation de données (132). Le composant est maintenu dans la portion évidée (121) en saillie (133) dans le logement (128) de manière à buter contre le doigt de guidage (111) et provoquer la rupture du composant lors d'une tentative de desserrage ou dévissage de l'organe de fixation.

## Description

### Domaine de l'invention

La présente invention concerne un organe de fixation de type vis ou goujon dont l'intégrité peut être contrôlée électroniquement.

### Art antérieur

Il existe de nombreuses solutions électroniques ou mécaniques pour garantir l'intégrité et contrôler la manipulation non autorisée de substances (ex matières nocives, radioactives...) lors de leur stockage ou transport. Il existe également des solutions pour contrôler si des systèmes, tels que des moteurs, des pièces aéronautiques ou similaires, ont été accédés ou manipulés sans autorisation.

Les technologies employées pour la réalisation des scellés sont très variées et dépendent principalement de l'usage et des degrés de sécurité demandés.

Ainsi, lorsqu'on désire s'assurer simplement de l'intégrité d'un objet, tel qu'un container ou un coffre, la fonction du scellé est de garantir que l'objet n'a pas été ouvert sans autorisation. Dans ce cas, des dispositifs peu onéreux, comme de simples colliers de plastique ou de métal apposés sur les organes d'ouverture de l'objet, peuvent être utilisés. Une simple inspection visuelle de l'intégrité de la structure des colliers suffit alors pour constater que le scellé a été violé ou non.

D'autre part, il existe de plus en plus de domaines dans lesquels les scellés doivent non seulement remplir leur fonction de base, qui est de pouvoir attester de l'inviolabilité de l'objet, mais aussi pouvoir fournir des informations durant leur utilisation. Ainsi, il existe actuellement des dispositifs qui comprennent des moyens mécaniques de scellement auxquels sont associés des moyens électroniques ou optiques qui permettent de mémoriser et transmettre des informations.

Cependant, les dispositifs de scellé actuels qui comprennent des moyens électroniques sont complexes et coûteux. Ils sont en général conçus pour un usage spécifique et ne peuvent pas être mis en oeuvre avec n'importe quel type d'objet. De plus, ils présentent une structure mécanique fragile qui les rend très sensibles aux manipulations et aux transports ce qui restreint encore leur utilisation.

### Objet et description succincte de l'invention

La présente invention vise à remédier aux inconvénients précités et à réaliser un dispositif de fixation à intégrité contrôlable, à usage multiple, et de faible coût tout en étant mécaniquement robuste. Le dispositif doit permettre un contrôle sûr et aisé de son intégrité. De plus, le dispositif doit pouvoir contenir des informations consultables de façon simple et rapide.

Ces buts sont atteints grâce à un organe de fixation comprenant une partie filetée et une tête permettant de faire tourner la partie filetée pour assurer le serrage de l'organe de fixation dans un élément correspondant, caractérisé en ce que ladite tête est formée d'un plateau solidaire de la partie filetée et d'un capot couvrant ledit plateau, le capot comportant une portion évidée dans laquelle un décrochement est ménagé pour former un logement, le plateau comprenant un doigt de guidage qui s'étend verticalement du côté opposé à la partie filetée, le doigt étant disposé à l'intérieur du logement pour former une butée sur laquelle le capot prend appui pour entraîner en rotation le plateau dans le sens de serrage, et en ce que le capot comprend en outre un composant électronique interrogeable à distance qui comprend un moyen de mémorisation de données, ledit composant étant maintenu dans la portion évidée en saillie dans le logement de manière à buter contre le doigt de guidage lors d'une tentative de desserrage de l'organe de fixation.

Ainsi, grâce à l'organe de fixation selon l'invention, le composant électronique, qui permet de mémoriser et de transmettre des informations, devient également le témoin de l'intégrité de l'organe. Le contrôle de l'intégrité du composant s'effectue par interrogation à distance de celui-ci, ce qui ne nécessite aucun démontage de l'organe.

Selon une caractéristique de l'invention, l'organe comprend un anneau qui coopère avec des première et seconde gorges respectivement ménagées dans le plateau et le capot pour maintenir le capot en position axiale sur le plateau.

L'organe de fixation peut comprendre en outre un élément de maintien pour maintenir le composant électronique dans le logement.

Pour empêcher le doigt de guidage de buter intempestivement sur le composant, le capot peut comprendre en outre un ergot sécable disposé dans le logement entre l'extrémité du composant en saillie dans le logement et le doigt de guidage. De même, le plateau peut présenter une forme légèrement elliptique pour bloquer le capot en rotation lorsque aucune force de serrage ou de desserrage n'est appliquée.

Selon un aspect particulier de l'invention, le capot est en PVC et la partie filetée ainsi que le plateau sont en acier inoxydable.

Selon un autre aspect particulier, le composant électronique est un transpondeur de type passif ou un transpondeur comprenant des moyens d'alimentation.

Le moyen de mémorisation de données du composant électronique peut comprendre des moyens de cryptage des données et être de type programmable ou multipages.

Selon un mode de réalisation particulier de l'invention, l'organe de fixation comprend en outre un second composant électronique interrogeable à distance, ce composant additionnel étant disposé dans le capot en dehors de la portion évidée. Ainsi, même après destruction du premier composant, il existe toujours un moyen de lire des donnés dans l'organe de fixation.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective éclatée d'un organe de fixation conformément à la présente invention,
- la figure 2 est une vue schématique en coupe d'un organe de fixation selon l'invention suivant le plan II de la figure 1,
- la figure 3A est une vue schématique en coupe de l'organe de fixation suivant le plan III de la figure 2 lorsqu'on lui applique un effort de serrage,
- la figure 3B est une vue schématique en coupe de l'organe de fixation suivant le plan III de la figure 2 lorsqu'on lui applique un effort de desserrage,
- la figure 4 est une vue en perspective d'un exemple de lecteur portable,
- la figure 5 est une vue schématique d'une variante de réalisation de l'organe de fixation conformément à l'invention,
- la figure 6 est une vue schématique en coupe d'une variante de l'organe de fixation de la figure 1 comprenant un composant supplémentaire,
- la figure 7 est une vue en perspective d'un exemple d'application de l'invention, et
- la figure 8 est une vue en perspective d'un autre exemple d'application de l'invention.

### Description détaillée des modes de réalisation de l'invention

Afin de ne pas compliquer inutilement la description, la présente invention sera essentiellement décrite en relation avec un organe de fixation type vis de boulon. Cependant, il apparaîtra clairement que la présente invention s'applique à tout autre type d'organe fixation qui est mis en place par serrage.

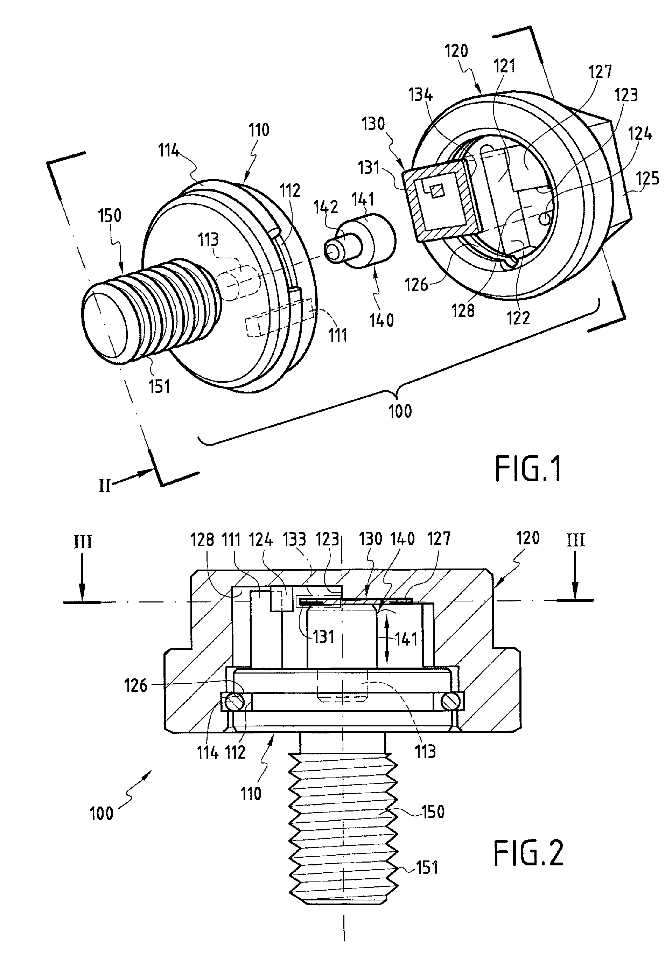

La figure 1 montre les différents éléments qui constituent un mode de réalisation d'un organe de fixation selon la présente invention.

Dans ce mode de réalisation, l'organe de fixation comprend une partie saillante 150 comprenant un filetage 151 destiné à coopérer avec un boulon ou un taraudage usiné dans un élément ou une structure. L'organe de fixation comprend également une tête 100 formée principalement d'un plateau 110 solidaire de la partie filetée 150 et d'un capot 120 qui est assemblé avec le plateau de manière à couvrir celui-ci pour former la partie externe de la tête de l'organe de fixation. A cet effet, le capot 120 comprend une partie supérieure 125 de forme hexagonale apte à coopérer avec un dispositif de serrage tel qu'une clé ou pince. La forme de la partie supérieure 125 du capot peut être très variée. Elle dépend de la fonction de l'organe de fixation (ex fermeture, blocage, freinage,...) et des dispositifs de serrage avec lesquels elle coopère. Ainsi, la partie supérieure 125 peut présenter par exemple la forme d'un prisme (hexagonale ou carré), ou bien d'un cylindre ou d'une calotte sphérique munie d'une empreinte.

Conformément à l'invention, le capot 120 est arrangé pour pouvoir recevoir un composant électronique 130. A cet effet, un évidement 121 est usiné à l'intérieur du capot afin de former un logement pour le composant 130. Une partie du fond de l'évidement 121 est en outre usinée pour former un décrochement 123 délimitant une portion 128 plus profonde que la portion non usinée 127. Dans ce mode réalisation, le composant 130 est maintenu contre la portion 127 de l'évidement 121. La portion 127 présente toutefois une longueur inférieure à celle du composant 130 de sorte que, une fois logé contre le fond de la portion 127, une partie 133 du composant dépasse ou fait saillie dans la portion 128 comme représenté sur la figure 2.

Pour assurer le maintien du composant 130 dans le capot, celui-ci est collé sur le fond de la portion 127. Le maintien du composant peut être également renforcé par un écarteur 140 qui est maintenu en compression contre le composant. Dans le mode de réalisation ici considéré, l'écarteur 140 est formée d'un piston 142 qui, en compression, exerce une force de poussée sur un poussoir 141. Pour cela, le plateau 110 comprend une cavité 113 pour recevoir le piston 142 de l'écarteur 140, la cavité 113 ayant une profondeur inférieure à la hauteur du piston 142 lorsqu'il est au repos. Par conséquent, lorsque le capot 120 est assemblé sur le plateau 110, comme illustré en figure 2, l'écarteur 140, qui est en compression entre ces deux éléments, exerce une force d'appui sur le composant 130 qui permet d'assurer le maintien de ce dernier en cas d'affaiblissement du collage dans le temps par exemple.

Pour maintenir le capot 120 en place sur le plateau 110, un anneau de maintien 114 est partiellement disposé dans une gorge 112 usinée sur la périphérie du plateau 110. La partie de l'anneau de maintien 114 qui dépasse de la gorge 112 est utilisée pour le positionnement du capot sur le plateau au moyen d'une gorge 126 usinée dans le capot 120. Ainsi, tel que représenté sur la figure 2, la gorge 126 du capot 120 est engagée avec l'anneau 114 ce qui permet de retenir le capot sur le plateau. Tout autre dispositif de maintien qui permet une retenue axiale du capot tout en laissant ce dernier mobile en rotation par rapport au plateau peut être utilisé.

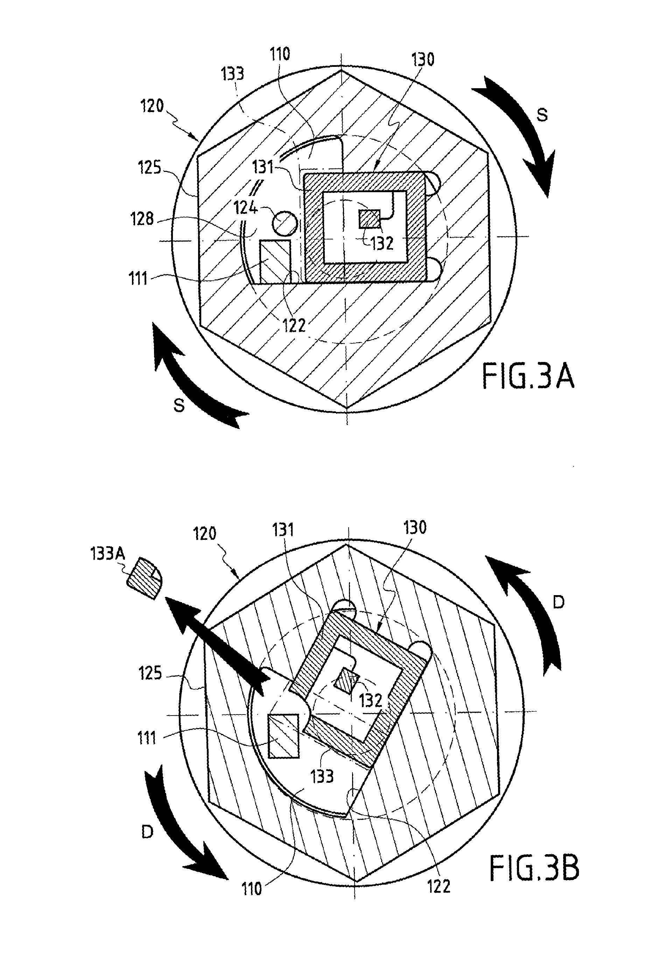

Le capot étant mobile en rotation par rapport au plateau, un doigt de guidage 111 est fixé sur la surface supérieure du plateau 110 pour permettre l'entraînement en rotation du plateau lorsqu'on tourne le capot dans le sens de serrage. Le doigt 111 forme alors une butée sur laquelle le bord 122 de l'évidement 121 du capot prend appui pour entraîner en rotation le plateau dans le sens de serrage. Cette mise en oeuvre est illustrée sur la figure 3A qui montre que lorsqu'on applique un effort de serrage selon une direction S, le bord 122 du capot 120 vient en contact du doigt 111 qui transmet alors au plateau 110 le mouvement de rotation appliqué au capot. Ceci permet de visser l'organe de fixation de l'invention de la même façon qu'avec une vis classique.

Dans la présente invention, on cherche à réaliser un organe de fixation dont l'intégrité peut être contrôlée rapidement et sans démontage. On utilise pour cela le composant électronique 130 comme témoin de cette intégrité. En effet, puisque le composant électronique est interrogeable à distance comme décrit plus loin en détail, si celui-ci est endommagé physiquement au point de ne plus être interrogeable, il est possible de déterminer si l'organe a été manipulé sans autorisation. En d'autres termes, l'intégrité de l'organe de fixation selon l'invention est assurée par l'intégrité mécanique et, par conséquent, électronique du composant.

Plus précisément, le doigt de guidage 111 s'étend verticalement du côté opposé à la partie filetée 150 et présente une hauteur légèrement inférieure à la profondeur de la portion 128 lorsque que le capot est positionné sur le plateau. En se référant à la figure 2, on constate que l'extrémité du doigt de guidage présente dans la portion 128, se situe au-dessus de la partie 133 du composant qui fait saillie dans cette portion. Par conséquent, une partie du doigt de guidage 111 rencontrera la partie 133 du composant lorsque que le capot sera tourné dans le sens de dévissage ou desserrage. Ainsi, conformément au principe de l'invention, toute tentative de dévissage de l'organe de fixation aboutira à la rupture du composant.

Tel que représenté en figure 1, le composant électronique 130 est formé d'un substrat 133 sur lequel sont disposées une puce électronique 132 et une antenne 131. L'antenne 131 est formée par un bobinage qui s'étend sur tout le pourtour du substrat. Une extrémité de ce bobinage est reliée à la puce 132. La puce 132 comprend principalement un circuit électronique de mémorisation de données qui peut être accédé en lecture ainsi qu'en écriture le cas échéant. La lecture, et éventuellement l'écriture, de données dans le circuit de mémoire s'effectue par transmission radiofréquence grâce à l'antenne 131 notamment. Si l'on interrompt le bobinage qui constitue l'antenne 131, celle-ci devient inopérante et aucune transmission entre la puce 132 et l'extérieur ne peut plus être réalisée, témoignant ainsi de l'endommagement du composant 130 et donc d'une manipulation interdite.

La figue 3B illustre une telle manipulation. Lorsqu'on tente de dévisser l'organe de fixation par application d'un effort dans le sens de dévissage ou desserrage D sur le capot 120, le doigt de guidage 122 va venir buter sur la partie 133 du composant 130 qui dépasse dans la portion 128. Un fragment 133A du composant est alors brisé. Le fragment 133A qui est séparé du composant correspond à la rupture de l'antenne 131 ce qui empêche toute transmission avec la puce 132. En conséquence, il faut s'assurer que le composant 130 dépasse suffisamment dans le logement 128 pour que le doigt de guidage 122 brise un fragment du composant correspondant à la rupture de l'antenne.

Un exemple de composant électronique qui peut être utilisé dans l'organe de fixation de l'invention est un modèle de transpondeur (Ario 10 R/0 ou Ario 40 R/W) de la société TAGSYS qui se présente sous la forme d'un carré de 13.6 mm de côté et de 1 mm d'épaisseur avec une capacité mémoire de 2kbits. Ce modèle de transpondeur est de type passif, c'est à dire que l'antenne sert non seulement à la transmission des données mais aussi à recevoir un champ d'activation pour l'alimentation en énergie électrique du circuit électronique de la puce. La mémoire du circuit électronique contient notamment un code unique qui constitue l'identité de l'organe de fixation.

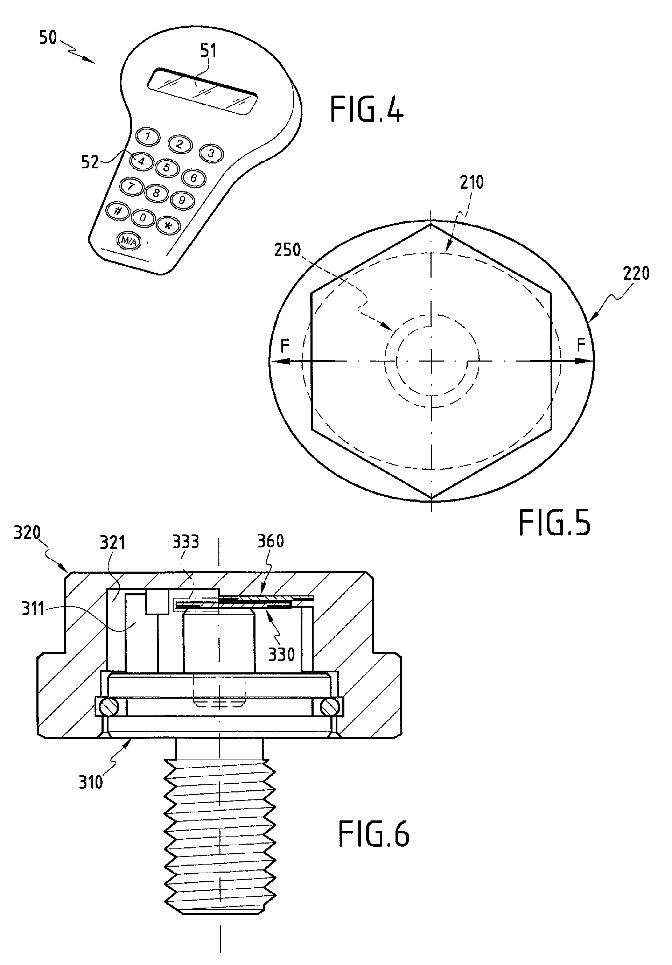

La lecture des données mémorisées dans le transpondeur, telles que l'identité de l'organe ou des informations sur la substance ou le système associé, peut être effectuée par exemple à l'aide d'un lecteur portable 50 représenté en figure 4. A titre d'exemple, un lecteur portable connu sous le nom "MEMOR 2000" de la société MINEC peut être utilisé pour alimenter et lire les données du transpondeur à la fréquence de 13.56 MHz. Un tel lecteur comporte un écran d'affichage 51, un clavier 52 et/ou des moyens de mémorisation des données interrogées. Le lecteur active le transpondeur par radiofréquence (RF), par exemple à une fréquence de 13.56 MHz. Cette onde charge une capacité présente dans le circuit du transpondeur. Lorsque cette dernière se décharge, elle renvoie au lecteur un code ou une information, inscrite dans la mémoire du transpondeur.

Le code et/ou les informations de chaque transpondeur interrogé sont ainsi envoyés vers le lecteur 50 et affichés sur son écran 51 et/ou stockés dans sa mémoire, ou transférés, via une liaison série, vers un ordinateur. Un logiciel peut permettre d'établir la corrélation entre le numéro d'identification de l'organe de fixation (i.e. le code du transpondeur) et des données diverses telles que par exemple le lieu, et/ou le nom de l'inspecteur ayant installé l'organe, et/ou la date de pose de celui-ci. Le système ainsi constitué permet la lecture des données à une distance pouvant aller jusqu'à 30 cm environ, ce qui est suffisant pour la plupart des utilisations.

Alternativement, dans le cas d'un lieu de vérification fixe, il est possible d'utiliser divers types de lecteurs non portables qui présentent des géométries d'antennes permettant une lecture en série à une distance plus grande.

Le type de transpondeur décrit ci-dessus est particulièrement adapté pour la présente invention. En effet, de tels composants présentent un encombrement très réduit ce qui permet de les loger facilement dans des têtes d'organes de fixation telles que des vis. De plus, le substrat du composant étant en une matière fragile telle que du silicium, il peut être brisé facilement et permettre ainsi la destruction du composant ou au moins de l'antenne de ce dernier avec peu de résistance.

Il est également possible d'utiliser pour le composant 130 des transpondeurs qui comprennent un moyen d'alimentation autonome, telle qu'une batterie, celle-ci étant reliée à la puce 132 pour l'alimenter en énergie. Dans ce cas, il faut prévoir un logement supplémentaire dans le capot pour pouvoir intégrer le moyen d'alimentation.

Ainsi, grâce à la conception de l'organe de fixation propre à l'invention, l'intégrité de ce dernier peut être contrôlée de manière très simple et rapide bien qu'elle ne soit pas apparente. En effet, toute tentative de desserrage ou dévissage de l'organe de fixation est sanctionnée par la destruction mécanique du composant. Ainsi, l'intégrité du composant, et, par conséquent, celle de l'organe peut être contrôlée à l'aide d'un lecteur. Si le composant ne répond pas à une interrogation du lecteur cela signifie que celui-ci a subi des dommages et que l'intégrité de l'organe est contestable.

Pour guider le positionnement du capot 120 sur le plateau 110 lors de l'assemblage de l'organe de fixation, un ergot sécable 124 (figures 1 et 2) peut être placé dans la portion 128. Plus précisément, l'ergot 124 est placé à une distance déterminé du bord 122 de manière à ménager un espace de logement pour l'extrémité du doigt de guidage 111. Ainsi, la présence de l'ergot va non seulement faciliter le positionnement du capot mais aussi empêcher le composant 130 de venir buter intempestivement sur le doigt de guidage lorsque l'organe de fixation est soumis à des vibrations ou chocs (transport, manipulation,...) qui ne résultent pas d'une tentative non autorisée. L'ergot 124 doit être sécable pour ne pas empêcher la rupture du composant lors d'une tentative de desserrage ou dévissage de l'organe. Par exemple, l'ergot peut être en un matériau moins résistant que celui du doigt de guidage ou comporter une découpe facilitant sa rupture.

Alternativement, lorsque le capot est réalisé en un matériau déformable, tel que du PVC par exemple, le plateau peut avoir une forme légèrement elliptique afin de contrarier le glissement en rotation du capot sur le plateau. Comme illustré à la figure 5, un plateau 210 présente un forme légèrement en ellipse de sorte que lorsqu'un capot 220 en matériau déformable est arrangé sur celui-ci, il est engendré deux forces de contact F respectivement aux points de contact correspondant aux deux extrémités de l'abscisse de l'ellipse. La libre rotation du capot sur le plateau est alors limitée par les forces de contact F qui empêchent le composant de venir buter intempestivement sur le doigt de guidage.

Selon une caractéristique de l'invention, le plateau et la partie filetée peuvent être réalisés en acier inoxydable alors que le capot est en PVC. Plus généralement, tout type de matériau qui ne gêne pas le passage d'ondes électromagnétiques, notamment à des fréquences de 13.56 MHz, est envisageable pour la réalisation du capot. Ainsi, par exemple, celui-ci pourrait être réalisé en téflon, en nylon ou en fibres de verre.

Dans les cas où l'on souhaite pouvoir contrôler l'intégrité de l'organe de fixation et en même temps continuer à lire des données relatives à l'organe même en cas de manipulation non autorisée de l'organe, il est possible, selon une variante de réalisation, d'inclure un second composant interrogeable à distance du même type que le composant 130. Ce composant supplémentaire doit être disposé dans un endroit du capot qui ne se trouve pas sur le chemin du doigt de guidage afin de protéger ce composant lors des manipulations de l'organe. Un exemple de cette variante de réalisation est illustrée à la figure 6 qui montre un organe de fixation identique à celui présentée aux figures 1 et 2, à l'exception de l'adjonction d'un composant supplémentaire 360 qui est placé dans la partie haute du capot 320 de manière à être protégé du doigt 311 qui est destiné à briser le premier composant 330 lors d'une tentative de desserrage. Le fond de l'évidemment 321 dans le capot est alors usinée pour ménager en outre un logement pour ce composant supplémentaire. Tout autre emplacement dans le capot, en dehors du chemin du doigt de guidage et adapté pour accueillir le composant supplémentaire, peut être utilisé.

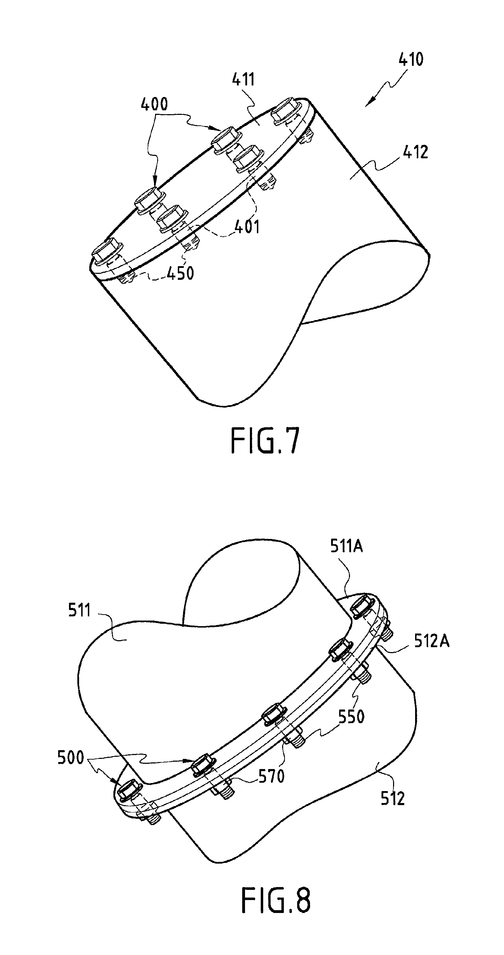

En ce qui concerne le mode de réalisation présenté en figure 7, il fonctionne de façon similaire à ceux décrits en relation avec les figures 1 à 5 et peut comprendre, de façon évidente, toutes les caractéristiques particulières décrites précédemment. Par souci de simplification, il ne sera donc pas décrit plus en détail.

Selon le principe du scellé, celui-ci ne peut être apposé qu'une fois sans atteinte à son intégrité. L'organe de fixation selon l'invention répond aux mêmes exigences. Ses applications peuvent être multiples. Comme représenté sur la figure 7, des organes de fixation 400 du même type que ceux décrits plus haut sont utilisés pour le scellement d'un couvercle 411 sur une enceinte 412 appartenant à un container ou une pièce moteur par exemple. Dans ce cas, la partie filetée 450 de l'organe de fixation 400 est vissée dans un filetage correspondant 401 directement taraudé dans la masse de la pièce 412. Toute tentative d'enlèvement du couvercle 411 pourra être détectée par le contrôle de l'intégrité de l'organe comme décrit plus haut.

Selon un autre exemple illustré en figure 8, l'organe de fixation peut être utilisé comme vis d'un boulon. Dans ce cas, à chaque organe de fixation 500 on associe un boulon 570 pour permettre le serrage et la fixation de deux éléments 511 et 512 entre eux. L'élément 511 peut être par exemple un couvercle de fermeture d'une enceinte matérialisée par l'élément 512. Les éléments 511 et 512 comprennent chacun une collerette 511A, 512A, des orifices de passage des organes de fixation 500 étant ménagés dans les collerettes. L'intégrité du dispositif ainsi formé est également garantie, même lorsque l'on essaie de retirer l'organe de fixation par dévissage de l'écrou 570. En effet, pour pouvoir dévisser l'écrou, il faut maintenir la tête de l'organe de fixation pour que cette dernière ne tourne pas avec l'écrou. Ainsi, dès l'application d'un effort de desserrage sur l'écrou, le composant sera détruit par la rotation du plateau qui entraîne le doigt de guidage à venir buter contre le composant.

L'organe de fixation selon l'invention présente les avantages suivants.

Les informations, telles qu'un code d'identification, peuvent être lues sans démontage ou altération de l'organe de fixation lorsque celui-ci est posé.

L'utilisation d'un lecteur portable pour l'identification et l'interrogation de l'organe facilite le travail de contrôle. Il suffit de transporter le lecteur sur chacun des sites à contrôler.

Les données mémorisées dans le scellé peuvent être facilement stockées, grâce à une simple liaison informatique série. On peut alors traiter rapidement les données extraites, ce qui accélère et abaisse le coût de l'identification.

II est possible d'utiliser des transpondeurs multipages afin de stocker des informations diverses, comme des informations sur la nature, la provenance, les étapes de cheminement ou bien le lieu de départ du matériel ou produit scellé, ce qui augmente encore les possibilités d'utilisation de l'organe de fixation. Lors d'un acheminement en plusieurs étapes par exemple, les informations pourront être utiles pour déterminer le lieu ou la date d'une éventuelle manipulation non autorisée.

Lorsque le circuit du transpondeur comprend des moyens programmables ou encryptables, il est possible de coder ou crypter les données mémorisées dans l'organe de fixation, d'où un niveau de sécurité accru.

L'organe de fixation présente un faible coût de fabrication (environ moins de 5 Euros) et une durée de vie élevée (environ 10 ans pour un organe de fixation avec transpondeur passif).

La vérification de l'intégrité de l'organe est réalisée de façon simple et rapide: si le lecteur ne peut lire les informations mémorisées c'est qu'on a tenté de desserrer ou dévisser l'organe.

## Revendications

1. Organe de fixation comprenant une partie filetée (150) et une tête (100) permettant de faire tourner la partie filetée pour assurer le serrage de l'organe de fixation dans un élément correspondant,
**caractérisé en ce que** ladite tête (100) est formée d'un plateau (110) solidaire de la partie filetée (150) et d'un capot (120) couvrant ledit plateau,
le capot (120) comportant une portion évidée (121) dans laquelle un décrochement est ménagé pour former un logement (128),
le plateau (110) comprenant un doigt de guidage (111) qui s'étend verticalement du côté opposé à la partie filetée, le doigt étant disposé à l'intérieur du logement (128) pour former une butée sur laquelle le capot prend appui pour entraîner en rotation le plateau dans le sens de serrage,
et **en ce que** le capot (120) comprend en outre un composant électronique interrogeable à distance (130) qui comprend un moyen de mémorisation de données (132), ledit composant étant maintenu dans la portion évidée (121) en saillie (133) dans le logement (128) de manière à buter contre le doigt de guidage (111) lors du desserrage de l'organe de fixation.

2. Organe de fixation selon la revendication 1, **caractérisé en ce qu'**il comprend un anneau (114) qui coopère avec des première et seconde gorges (112, 126) respectivement ménagées dans le plateau et le capot pour maintenir ledit capot en position axiale sur le plateau.

3. Organe de fixation selon la revendication 1 ou 2, **caractérisé en ce qu'**il comprend en outre un élément de maintien (140) pour maintenir le composant électronique (130) dans le logement (123).

4. Organe de fixation selon l'une quelconque des revendications 1 à 3, **caractérisé en ce que** le capot comprend en outre un ergot sécable (124) disposé dans le logement (128) entre l'extrémité (133) du composant en saillie dans le logement et le doigt de guidage (111).

5. Organe de fixation selon l'une quelconque des revendications 1 à 4, caractérisé en que le plateau (210) présente une forme légèrement elliptique pour bloquer le capot (220) en rotation lorsque aucune force de serrage ou de desserrage n'est appliquée.

6. Organe de fixation selon l'une quelconque des revendications 1 à 5, **caractérisé en ce que** le capot est en PVC.

7. Organe de fixation selon l'une quelconque des revendications 1 à 6, **caractérisé en ce que** la partie filetée et le plateau sont en acier inoxydable.

8. Organe de fixation selon l'une quelconque des revendications 1 à 7, **caractérisé en ce que** le composant électronique (130) est un transpondeur de type passif.

9. Organe de fixation selon l'une quelconque des revendications 1 à 7, **caractérisé en ce que** le composant électronique (130) est un transpondeur comprenant des moyens d'alimentation.

10. Organe de fixation selon l'une quelconque des revendications 1 à 9, **caractérisé en ce que** le moyen de mémorisation de données du composant électronique (130) comprend des moyens de cryptage des données.

11. Organe de fixation selon l'une quelconque des revendications 1 à 10, **caractérisé en ce que** le moyen de mémorisation de données du composant électronique (130) est de type programmable ou multipages.

12. Organe de fixation selon l'une quelconque des revendications 1 à 11, **caractérisé en ce qu'**il comprend en outre un second composant électronique interrogeable à distance (360), ledit second composant étant disposé dans le capot (320) en dehors de la portion évidée (321).
